# EUROPÄISCHE PATENTANMELDUNG

(11) **EP 3 229 085 A1**
(43) Veröffentlichungstag der Anmeldung: **11.10.2017**
(21) Anmeldenummer: 16163923.2
(22) Anmeldetag: 05.04.2016
(51) Int. Cl.: G05B 19/042, G11B 20/00, H03M 1/00

(54) **EINGANGSSCHALTUNG ZUR WAHLWEISEN ERFASSUNG EINES ANALOGEN ODER BINÄREN SIGNALS**

(71) Anmelder: Siemens Aktiengesellschaft, 80333 München (DE)
(72) Erfinder: Scharf, Alexander, 76870 Kandel (DE)

(57) **Zusammenfassung**

Die Erfindung betrifft eine Eingangsschaltung zur wahlweisen Erfassung eines analogen oder binären Signals, wobei das analoge Signal aus einem Eingangsstrom (Iₑ) und das binäre Signal aus dem Eingangsstrom (Iₑ) oder einer Eingangsspannung (Uₑ) besteht, welche bei Über- oder Unterschreiten eines Schwellenwerts jeweils einen binären Zustand markieren. An dem Eingang (E) der Eingangsschaltung liegt ein Strommesswiderstand (R2) in Reihe mit einem aus zwei Teilwiderständen (R11, R12) bestehenden hochohmigen Widerstand (R1). Zur Erfassung des analogen Signals schließt ein steuerbarer Schalter (T1) den hochohmigen Widerstand (R1) kurz und ein Analog-/Digital-Umsetzer (ADU) setzt die an dem Strommesswiderstand (R2) abfallende Spannung in einen digitalen Messwert (MW) um. Der Verbindungspunkt der Teilwiderstände (R11, R12) ist über einen Strombegrenzungswiderstand (R4) und eine Diode (D1) mit der Basis eines Transistors (T2) verbunden, der mit seinem Emitter an einem Betriebsspannungsanschluss (V+), mit seiner Basis über einen Vorwiderstand (R5) an Masse (M) und mit seinem Kollektor über einen Kollektorwiderstand (R6; R61, R62) an Masse (M) angeschlossen ist. Die Spannung oder eine Teilspannung an dem Kollektorwiderstand (R6; R61, R62) bezeichnet den Zustand des binären Signals.

## Beschreibung

Die Erfindung betrifft eine Eingangsschaltung zur wahlweisen Erfassung eines analogen oder binären Signals, wobei das analoge Signal aus einem Eingangsstrom bis zu einem maximalen Stromwert besteht und das binäre Signal aus dem Eingangsstrom oder einer Eingangsspannung besteht, welche bei Über- oder Unterschreiten eines Strom- oder Spannungsschwellenwerts jeweils einen binären Zustand markieren, mit einem niederohmigen Strommesswiderstand, der in Reihe mit einem hochohmigen Widerstand an einem Eingang der Eingangsschaltung liegt und an dem ein Analog-/Digital-Umsetzer zur Messung und Umsetzung des von dem analogen Signal an dem Strommesswiderstand erzeugten Spannungsabfalls in einen digitalen Messwert angeschlossen ist, wobei die Stelle der Verbindung des Strommesswiderstands mit dem Eingang einen Bezugspunkt der Eingangsschaltung bildet, und mit einem zu dem hochohmigen Widerstand parallelen steuerbaren Schalter, der bei der Erfassung des analogen Signals geschlossen und bei der Erfassung des binären Signals geöffnet ist.

Bei einer derartigen aus der WO 2015/128336 A1 bekannten Eingangsschaltung dient der Analog-/Digital-Umsetzer dazu, sowohl bei der Erfassung des analogen Signals als auch bei der Erfassung des binären Signals einen digitalen Messwert der an dem Strommesswiderstand abfallenden Spannung zu bilden. Bei Erfassung des binären Signals wird der digitale Messwert in einer dem Analog-/Digital-Umsetzer nachgeordneten Recheneinheit (Prozessor) mit einem oberen und/oder unteren Schwellenwert verglichen und bei Überschreitung oder Unterschreitung des Schwellenwerts ein logisches High- oder logisches Low-Signal erzeugt. Die Spannungsteilung durch den hochohmigen Widerstand und den niederohmigen Strommesswiderstand führt dazu, dass der erzeugte digitale Messwert des binären Signals sehr klein ist (typischerweise < 0,5 V), so dass die Festlegung des Schwellenwertes schwierig sein kann, zumal bei unterschiedlichen Typen die typischen Eingangspegel unterschiedlich sein können. Außerdem ist die Analog-/Digital-Umsetzung grundsätzlich mit einer gewissen Latenz verbunden, was bei schnellen binären Signalen nachteilig sein kann oder den Einsatz eines sehr schnellen Analog-/Digital-Umsetzers erfordert.

Der Erfindung liegt die Aufgabe zugrunde, eine Eingangsschaltung zur wahlweisen Erfassung eines analogen oder binären Signals anzugeben, die sich durch einen sehr einfachen Aufbau auszeichnet und eine sichere Pegelerkennung bei binären Signalen ermöglicht.

Gemäß der Erfindung wird die Aufgabe dadurch gelöst, dass bei der Eingangsschaltung der eingangs angegebenen Art der hochohmige Widerstand aus zwei Teilwiderständen besteht, deren Verbindungspunkt über einen Strombegrenzungswiderstand und eine Diode mit der Basis eines Transistors verbunden ist, der mit seinem Emitter an einem Betriebsspannungsanschluss, mit seiner Basis über einen Vorwiderstand an dem Bezugspunkt und mit seinem Kollektor über einen Kollektorwiderstand an dem Bezugspunkt angeschlossen ist, wobei
- die Durchflussrichtung der Diode gegen die Richtung des Basisstroms weist,
- die Betriebsspannung größer als der von dem maximalen Stromwert des Eingangsstroms an dem Strommesswiderstand erzeugte Spannungsabfall und kleiner als der Spannungsschwellenwert oder die bei dem Stromschwellenwert an dem Eingang der Eingangsschaltung anliegenden Eingangsspannung gewählt ist,
- das Verhältnis der Teilwiderstände derart gewählt ist, dass bei einer Eingangsspannung mit dem Spannungsschwellenwert oder einem Eingangsstrom mit dem Stromschwellenwert die Spannung zwischen dem Verbindungspunkt und dem Bezugspunkt der Eingangsschaltung zumindest annähernd der Betriebsspannung entspricht, und
- die Spannung oder eine Teilspannung an dem Kollektorwiderstand den Zustand des binären Signals bezeichnet.

Die verwendeten Begriffe "größer" und "kleiner" sind vorzeichenunabhängig im Sinne von "betragsmäßig größer" bzw. "betragsmäßig kleiner" zu verstehen. Bei positiven Eingangsspannungen oder -strömen gegenüber dem Bezugspunkt (Masse) der Eingangsschaltung ist die Betriebsspannung positiv und der Transistor ein PNP-Typ; bei negativen Eingangsspannungen oder -strömen gegenüber dem Bezugspunkt ist die Betriebsspannung negativ und der Transistor ein NPN-Typ.

Der Schwellenwert für die Pegelerkennung der binären Signale ist in einfacher Weise durch das Verhältnis der hochohmigen Teilwiderstände und die Betriebsspannung bestimmt, wobei allenfalls noch eine Basis-Emitter-Spannung des Transistors von 0,3-0,7 V zu berücksichtigen ist. Wenn die Eingangsspannung bzw. die von dem Eingangsstrom an dem hochohmig geschalteten Eingang hervorgerufene Spannung unter dem Schwellenwert liegt, ist der Transistor leitend, so dass die Spannung über dem Kollektorwiderstand den Wert der Betriebsspannung annimmt. Übersteigt die Spannung an dem Eingang der Eingangsschaltung den Schwellenwert, so sperrt der Transistor und die Spannung über dem Kollektorwiderstand nimmt den Wert Null an. Die Spannung an dem Kollektorwiderstand bezeichnet also den Zustand des binären Signals, wobei sie ggf. durch Teilung des Kollektorwiderstands in zwei Einzelwiderstände auf einen für die Weiterverarbeitung geeigneten Pegel reduziert werden kann.

Bei der Erfassung von analogen Signalen, wenn also der hochohmige Widerstand kurzgeschlossen ist, ist die Basis des Transistors über die Diode, den Strombegrenzungswiderstand und die beiden parallelen hochohmigen Teilwiderstände mit dem Strommesswiderstand verbunden. Solange der Eingangsstrom unter dem maximalen Stromwert liegt und somit der von ihm hervorgerufene Spannungsabfall über dem Strommesswiderstand den Wert der Betriebsspannung nicht erreicht, ist der Transistor leitend. Die Diode verhindert dabei, dass der Basisstrom in Richtung zu dem Strommesswiderstand fließt und dadurch die hochpräzise Strommessung beeinflusst. Wenn der Eingangsstrom den maximalen Stromwert überschreitet und der von ihm erzeugte Spannungsabfall an dem Strommesswiderstand den Wert der Betriebsspannung erreicht, geht der Transistor in den sperrenden Zustand über. Der Wechsel der Spannung an dem Kollektorwiderstand des Transistors von dem Wert der Betriebsspannung auf den Wert Null kann daher in vorteilhafter Weise zur Detektion eines Überstroms bzw. Kurzschlussstroms herangezogen werden. Im Überstromfall kann die Eingangsschaltung vor thermischer Überlastung geschützt werden, indem der Schalter zu Überbrückung des hochohmigen Widerstands getaktet gesteuert wird, so dass der Eingangswiderstand der Eingangsschaltung in dem Takt zwischen hochohmig und niederohmig wechselt. Zu den Zeitpunkten, wenn der Eingangswiderstand niederohmig ist, kann überprüft werden, ob der Eingangsstrom weiterhin zu hoch ist oder wieder im Sollbereich liegt.

Während der Erfassung des binären Signals kann für den Fall, dass betriebsmäßig ein Mindesteingangsstrom (Ruhestrom) fließt, der von dem Analog-/Digital-Umsetzer erzeugte digitale Messwert auf Unterschreitung eines Grenzwerts überwacht werden, um so eine Leitungsunterbrechung zwischen dem Binärgeber und der Eingangsschaltung detektieren zu können. So kann der Binärgeber bekanntermaßen einen Geberwiderstand mit einem dazu parallelen Schalter aufweisen, wobei eine Geberspannung je nach Schaltstellung entweder direkt oder über den Geberwiderstand an den Eingang der Eingangsschaltung geschaltet wird.

Zum Schutz des Transistors bei hohen Eingangsspannungen ist vorzugsweise eine weitere Diode antiparallel zu der Basis-Emitter-Diode des Transistors geschaltet.

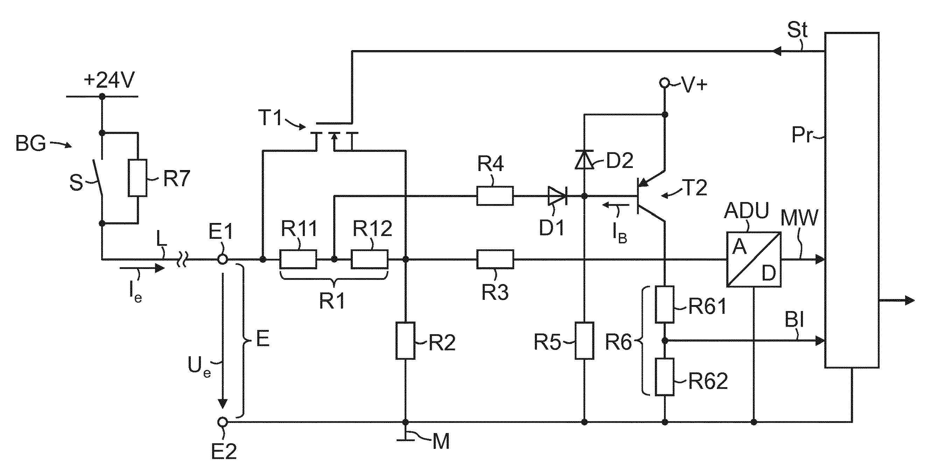

Zur weiteren Erläuterung der Erfindung wird im Folgenden auf die einzige Figur der Zeichnung Bezug genommen, die in schematischer Darstellung ein Ausführungsbeispiel der erfindungsgemäßen Eingangsschaltung zeigt.

Die gezeigte Eingangsschaltung weist einen Eingang E mit zwei Eingangsanschlüssen E1, E2 auf, von denen der Eingangsanschluss E2 mit einem Bezugspunkt (Masse) M der Eingangsschaltung verbunden ist. An dem Eingang E liegt eine Reihenschaltung aus einem aus zwei Teilwiderständen R11, R12 bestehenden hochohmigen Widerstand R1 und einem niederohmigen Strommesswiderstand R2, der als Präzisionswiderstand ausgebildet ist. Der Strommesswiderstand R2 ist mit der Masse M verbunden und unmittelbar oder über einen weiteren Widerstand R3 an dem Eingang eines Analog-/Digital-Umsetzers ADU angeschlossen. Der Analog-/Digital-Umsetzer ADU setzt eine über dem Strommesswiderstand R2 abfallende Spannung in einen digitalen Messwert MW um und übergibt diesen an eine Recheneinrichtung (Mikroprozessor) Pr.

Parallel zu dem hochohmigen Widerstand R1 bzw. den Teilwiderständen R11, R12 liegt ein steuerbarer Schalter (MOSFET) T1, der von der Recheneinrichtung Pr mit einem Steuersignal St angesteuert wird. Der Verbindungspunkt der beiden Teilwiderstände R11, R12 ist über einen Strombegrenzungswiderstand R4 und eine Diode D1 mit der Basis eines Transistors T2 verbunden. Die Diode D1 ist mit ihrer Durchflussrichtung gegen die Richtung des Basisstroms I_{B} des Transistors T2 gepolt. Der Transistor T2 ist vom PNP-Typ und mit seinem Emitter an einem Betriebsspannungsanschluss angeschlossen, der eine positive Betriebsspannung V+ in Bezug auf die Masse M führt. Die Basis des Transistors T2 und sein Kollektor sind über einen Vorwiderstand R5 bzw. über einen hier aus zwei Einzelwiderständen R61, R62 bestehenden Kollektorwiderstand R an der Masse M angeschlossen. Der Verbindungspunkt der beiden Einzelwiderstände R61, R62 ist mit einem Binäreingang BI der Recheneinrichtung Pr verbunden. Zum Schutz des Transistors T2 ist eine Diode D2 antiparallel zu seiner Basis-Emitter-Strecke geschaltet.

Die Eingangsschaltung dient zur wahlweisen Erfassung eines analogen oder binären Signals, wobei das analoge Signal aus einem Eingangsstrom Iₑ bis zu einem maximalen Stromwert besteht und das binäre Signal aus dem Eingangsstrom Iₑ oder einer Eingangsspannung Uₑ besteht, welche bei Über- oder Unterschreiten eines Strom- oder Spannungsschwellenwerts jeweils einen binären Zustand markieren. Bei dem analogen Signal handelt es sich beispielsweise um einen Strom von 0-24 mA, d. h. der maximale Stromwert beträgt 24 mA. Der aus einem Stromwert von 20 mA an dem Strommesswiderstand resultierende Spannungsabfall soll nicht mehr als 5-6 V betragen. Bei dem binären Signal handelt es sich beispielsweise um eine Spannung, bei der ein Wert > 11 V dem binären Wert "Eins" und ein Wert < 5 V dem binären Wert "Null" entspricht. Im Falle eines binären Stromsignals soll ein Wert > 2 mA den binären Wert "Eins" und ein Wert < 0,5 mA den binären Wert "Null" bezeichnen. Das bedeutet, dass bei einer Eingangsspannung von 11 V ein Eingangsstrom von mindestens 2 mA fließen muss und dass dementsprechend der Eingangswiderstand maximal 5,5 kΩ beträgt.

Unter diesen Randbedingungen werden für die Widerstände R11, R12 und R2 beispielsweise die Werte 1,2 kΩ, 3 kΩ und 200 Ω gewählt. Bei einer Eingangsspannung von 11 V (binärer Wert "Eins") und geöffnetem Schalter T1 fließt dann ein Strom von 2,5 mA. Der Spannungsabfall über den Widerständen R12 und R2, also die Spannung zwischen dem Verbindungspunkt der Teilwiderstände R11, R12 und Masse M, beträgt 8 V und fällt bei einer Eingangsspannung von 5 V (binärer Wert "Null") auf 3,6 V.

Der Spannungsschwellenwert für die Unterscheidung der beiden binären Zustände wird nun so gewählt, dass die Spannung zwischen dem Verbindungspunkt der Teilwiderstände R11, R12 und Masse M zumindest annähernd der Betriebsspannung V+ entspricht, die wiederum größer als der bei der analogen Strommessung von dem maximalen Stromwert von 24 mA an dem Strommesswiderstand erzeugten Spannungsabfall gewählt ist, also größer als 24 mA · 200 Ω = 4,8 V ist, und z. B. 5,3 V beträgt. In diesem Fall beträgt der Spannungsschwellenwert 7,3 V. Unter Berücksichtigung einer Basis-Emitter-Spannung des Transistors T2 von beispielsweise 0,7 V ergibt sich der Spannungsschwellenwert zu 6,3 V. In beiden Fällen liegt der Spannungsschwellenwert eindeutig zwischen den oben genannten Werten von 11 V und 5 V.

Zur Erfassung eines analogen Signals in Form des Eingangsstroms Iₑ = 0-24 mA wird der Schalter T1 geschlossen, so dass er den hochohmigen Widerstand R1 kurzschließt und der Strommesswiderstand R2 unmittelbar an dem Eingang E liegt. Der Eingangsstrom Iₑ wird über den von ihm an dem Strommesswiderstand R2 hervorgerufenen Spannungsabfall mit hoher Genauigkeit gemessen und in den digitalen Messwert MW umgesetzt. Die Spannung über dem Strommesswiderstand ist mit maximal 4,8 V kleiner als die Betriebsspannung V+ von 5,3 V, so dass die Diode D1 sperrt und der Basisstrom des Transistors T2 über den Vorwiderstand R5 abfließt, ohne die Strommessung zu beeinflussen. Der Transistor T2 ist leitend, so dass die Spannung an dem Binäreingang BI der Recheneinrichtung Pr der um das Teilerverhältnis der Widerstände R61, R62 herabgesetzten Betriebsspannung V+ entspricht. Wenn der Eingangsstrom Iₑ beispielsweise wegen eines Kurzschlusses soweit anwächst, dass der von ihm an dem Strommesswiderstand erzeugte Spannungsabfall den Wert der Betriebsspannung, also 5,3 V, erreicht, geht der Transistor T2 in einen sperrenden Zustand über und die Spannung an dem Binäreingang BI der Recheneinrichtung Pr fällt auf den Wert Null. Anhand dieses Spannungswechsels detektiert die Recheneinrichtung Pr den Überstrom- bzw. Kurzschlussfall und geht dazu über, den Schalter T1 getaktet zu steuern (z. B. mit einen Puls-Pause-Verhältnis von 4 s zu 12 s), so dass der Eingangswiderstand der Eingangsschaltung in dem Takt zwischen dem hochohmigen und dem niederohmigen Zustand wechselt. Dadurch wird die Eingangsschaltung thermisch entlastet. Zu den Zeitpunkten, wenn der Eingangswiderstand niederohmig ist, überprüft die Recheneinrichtung Pr, ob der Eingangsstrom Iₑ weiterhin zu hoch ist oder wieder im Sollbereich liegt.

Zur Erfassung eines binären Signals in Form einer Eingangsspannung Uₑ oder eines Eingangsstroms Iₑ wird der Schalter T1 geöffnet, so dass der Eingang E der Eingangsschaltung hochohmig ist. Liegt die Eingangsspannung Uₑ unter dem Spannungsschwellenwert von 7,3 V, so ist die Spannung zwischen dem Verbindungspunkt der Teilwiderstände R11, R12 und Masse M kleiner als die Betriebsspannung V+ von 5,3V. Infolgedessen leitet der Transistor T2 und die Spannung an dem Binäreingang BI der Recheneinrichtung Pr entspricht der um das Teilerverhältnis der Widerstände R61, R62 herabgesetzten Betriebsspannung V+. Wenn die Eingangsspannung Uₑ über den Spannungsschwellenwert ansteigt, wird die Spannung zwischen dem Verbindungspunkt der Teilwiderstände R11, R12 und Masse M größer als die Betriebsspannung V+, so dass der Transistor T2 in einen sperrenden Zustand übergeht und die Spannung an dem Binäreingang BI der Recheneinrichtung Pr auf den Wert "Null" fällt. Die Spannung an dem Binäreingang BI der Recheneinrichtung Pr gibt also in invertierter Form den Zustand des binären Signals an. Bei hoher Eingangsspannung Uₑ begrenzt die Diode D2 die inverse Spannung über der Basis-Emitter-Diode des Transistors T2 auf maximal 1 V.

Die Temperaturabhängigkeit der Basis-Emitter-Diode des Transistors T2 wird in vorteilhafter Weise durch die Diode D1 kompensiert, weil beim Wechsel des binären Zustands die Spannung an der Anode der Diode D1 und die Spannung an dem Emitter des Transistors T2 praktisch identisch sind. Der Übergang von dem einen in den anderen binären Zustand wird also immer bei 5,3 V gemessen an der Anode der Diode D1 detektiert.

Bei dem gezeigten Beispiel wird das binäre Signal von einem Binärgeber BG erzeugt, der eine Parallelschaltung aus einem Geberwiderstand R7 und einem Schalter S enthält, die auf einer Seite an einer Geberspannung von z. B. +24 V liegt und auf der anderen Seite über eine Leitung L an dem Eingangsanschluss E1 der Eingangsschaltung angeschlossen ist. Es fließt also immer ein Strom, der von dem Analog-/Digital-Umsetzer ADU detektiert und in der Recheneinrichtung Pr auf Unterschreitung eines Grenzwerts überwacht werden kann, um so den Fall einer Unterbrechung der Leitung L zu detektieren. Bei einem Wert des Geberwiderstands R7 von beispielsweise 24 kΩ beträgt der Ruhestrom bei geöffnetem Schalter S etwa 0,85 mA und erzeugt an dem Strommesswiderstand R2 einen Spannungsabfall von 170 mV. Fällt dieser Wert auf "Null", so liegt eine Leitungsunterbrechung vor.

Das beschriebene Beispiel der Eingangsschaltung gilt für eine positive Eingangsspannung Uₑ bzw. einen positiven Eingangsstrom Iₑ gegenüber dem Bezugspunkt (Masse); die Betriebsspannung V+ ist positiv und der Transistor T2 ein PNP-Typ. Bei negativen Eingangsspannungen oder -strömen gegenüber dem Bezugspunkt ist die Betriebsspannung negativ, der Transistor T2 ein NPN-Typ, und die Dioden D1 und D2 werden in umgekehrter Richtung geschaltet. Der bipolare Transistor T2 kann durch einen Feldeffekttransistor mit Gate, Drain und Source anstelle von Basis, Kollektor und Emitter ersetzt werden.

## Patentansprüche

1. Eingangsschaltung zur wahlweisen Erfassung eines analogen oder binären Signals, wobei das analoge Signal aus einem Eingangsstrom (Iₑ) bis zu einem maximalen Stromwert besteht und das binäre Signal aus dem Eingangsstrom (Iₑ) oder einer Eingangsspannung (Uₑ) besteht, welche bei Über- oder Unterschreiten eines Strom- oder Spannungsschwellenwerts jeweils einen binären Zustand markieren, mit einem niederohmigen Strommesswiderstand (R2), der in Reihe mit einem hochohmigen Widerstand (R1) an einem Eingang (E) der Eingangsschaltung liegt und an dem ein Analog-/Digital-Umsetzer (ADU) zur Messung und Umsetzung des von dem analogen Signal an dem Strommesswiderstand (R2) erzeugten Spannungsabfalls in einen digitalen Messwert (MW) angeschlossen ist, wobei die Stelle der Verbindung des Strommesswiderstands (R2) mit dem Eingang (E) einen Bezugspunkt (M) der Eingangsschaltung bildet, und mit einem zu dem hochohmigen Widerstand (R2) parallelen steuerbaren Schalter (T1), der bei der Erfassung des analogen Signals geschlossen und bei der Erfassung des binären Signals geöffnet ist,
**dadurch gekennzeichnet,**
**dass** der hochohmige Widerstand (R1) aus zwei Teilwiderständen (R11, R12) besteht, deren Verbindungspunkt über einen Strombegrenzungswiderstand (R4) und eine Diode (D1) mit der Basis eines Transistors (T2) verbunden ist, der mit seinem Emitter an einem Betriebsspannungsanschluss (V+), mit seiner Basis über einen Vorwiderstand (R5) an dem Bezugspunkt (M) und mit seinem Kollektor über einen Kollektorwiderstand (R6; R61, R62) an dem Bezugspunkt (M) angeschlossen ist, wobei
- die Durchflussrichtung der Diode (D1) gegen die Richtung des Basisstroms (I_{B}) weist,
- die Betriebsspannung (V+) größer als der von dem maximalen Stromwert des Eingangsstroms (Iₑ) an dem Strommesswiderstand (R2) erzeugte Spannungsabfall und kleiner als der Spannungsschwellenwert oder die bei dem Stromschwellenwert an dem Eingang (E) der Eingangsschaltung anliegenden Eingangsspannung (Uₑ) gewählt ist,
- das Verhältnis der Teilwiderstände (R11, R12) derart gewählt ist, dass bei einer Eingangsspannung (Uₑ) mit dem Spannungsschwellenwert oder einem Eingangsstrom (Iₑ) mit dem Stromschwellenwert die Spannung zwischen dem Verbindungspunkt und dem Bezugspunkt (M) der Eingangsschaltung zumindest annähernd der Betriebsspannung (V+) entspricht, und
- die Spannung oder eine Teilspannung an dem Kollektorwiderstand (R6; R61, R62) den Zustand des binären Signals bezeichnet.

2. Eingangsschaltung nach Anspruch 1, **dadurch gekennzeichnet, dass** eine dem Analog-/Digital-Umsetzer (ADU) nachgeordnete Recheneinheit (Pr) dazu ausgebildet ist, während der Erfassung des analogen Signals die Spannung oder Teilspannung an dem Kollektorwiderstand (R6; R61, R62) zu überwachen und im Falle der Unterschreitung eines Grenzwerts einen Überstromfall zu detektieren.

3. Eingangsschaltung nach Anspruch 1, **dadurch gekennzeichnet, dass** die Recheneinheit (Pr) ferner dazu ausgebildet ist, bei Detektion des Überstromfalls den Schalter (T1) getaktet anzusteuern.

4. Eingangsschaltung nach einem der vorangehenden Ansprüche, **dadurch gekennzeichnet, dass** eine dem Analog-/Digital-Umsetzer (ADU) nachgeordnete Recheneinheit (Pr) dazu ausgebildet ist, während der Erfassung des binären Signals den von dem Analog-/Digital-Umsetzer (ADU) erzeugten digitalen Messwert (MW) zu überwachen und im Falle der Unterschreitung eines Grenzwerts eine Leitungsunterbrechung zu detektieren.

5. Eingangsschaltung nach einem der vorangehenden Ansprüche, **dadurch gekennzeichnet, dass** eine Diode (D2) antiparallel zu der Basis-Emitter-Diode des Transistors (T2) geschaltet ist.

6. Eingangsschaltung nach einem der vorangehenden Ansprüche, **dadurch gekennzeichnet, dass** anstelle des bipolaren Transistors (T2) mit Basis, Kollektor und Emitter ein Feldeffekttransistor mit Gate, Drain und Source vorgesehen ist.
